# EUROPÄISCHE PATENTSCHRIFT

(11) **EP 2 524 443 B1**
(45) Veröffentlichungstag und Bekanntmachung des Hinweises auf die Patenterteilung: **23.10.2013**
(21) Anmeldenummer: 10708486.5
(22) Anmeldetag: 12.01.2010
(51) Int. Cl.: H04B 3/54, H04L 12/10, H04L 12/40, H04B 3/56

(54) **EINRICHTUNG UND VERFAHREN ZUM BEREITSTELLEN EINER VERSORGUNGSSPANNUNG IN EINEM BUSKNOTEN EINES BUSNETZES**
DEVICE AND METHOD FOR PROVIDING A SUPPLY VOLTAGE IN A BUS NODE OF A BUS NETWORK
DISPOSITIF ET PROCÉDÉ DE FOURNITURE D'UNE TENSION D'ALIMENTATION À UN N UD DE BUS SUR UN RÉSEAU EN BUS

(43) Veröffentlichungstag der Anmeldung: 21.11.2012
(73) Patentinhaber: GIRA GIERSIEPEN GmbH & Co. KG, 42477 Radevormwald (DE); Tapko Technologies GmbH, 93059 Regensburg (DE)
(72) Erfinder: TOMIC, Petar, 93049 Regensburg (DE); ADLER, Klaus, 93173 Wenzenbach (DE); SEIFERT, Roland, 59071 Hamm (DE); KEMMANN, Harald, 42555 Velbert (DE); LASKIWITZ, Ingo, 42929 Wermelskirchen (DE)
(74) Vertreter: Tönhardt, Marion
(86) Internationale Anmeldenummer: PCT/DE2010/000017
(87) Internationale Veröffentlichungsnummer: WO 2011/085703

(56) Entgegenhaltungen:
- EP-A1- 0 854 587
- WO-A1-2007/003254
- DE-A1- 10 340 431

## Beschreibung

Die Erfindung betrifft eine Einrichtung zum Bereitstellen einer Versorgungsspannung in einem Busknoten eines Busnetzes, insbesondere in einem Busknoten des EIB-Netzes.

Busknoten sollen einerseits eine Kommunikation zwischen den darin enthaltenen Steuereinheiten, zumeist durch Mikroprozessoren realisiert, gewährleisten, andererseits ist es von Vorteil, wenn die Spannungsversorgung zusätzlich zu den Steuereinheiten auch die Versorgung von angeschlossenen Applikationsschaltungen, wie Relais, Sensoren, Taster, Anzeigen oder dergleichen, über den Bus gewährleistet. Ein Busknoten in diesem Sinne enthält daher einen Sender, einen Empfänger und eine Spannungsversorgung.

An diese Spannungsversorgung werden besondere Anforderungen gestellt, die gewährleisten, dass weder beim Hochlaufen der an den Bus angeschlossenen Geräte noch durch den zumeist variierenden Strombedarf der an den Busknoten angeschlossenen Applikationsschaltungen die Kommunikation zwischen verschiedenen Busknoten behindert oder im schlimmsten Fall sogar Fehlerinformation generiert wird.

Die Standards beispielsweise für einen EIB-Busknoten sind daher genauestens beschrieben und im Konnex Handbuch, Version 2.0, aufgeführt. Eine Sicherstellung der Eigenschaften fertiger EIB-Busgeräte erfolgt durch dort vorgeschriebene Tests, bei deren Bestehen die EIB-Busgeräte zertifiziert werden.

Steuerbefehle werden als Telegramme aus Bitfolgen über die Busleitungen verschickt. Das EIB-Signal eines einzelnen Bits ist durch einen zeitlich begrenzten Spannungseinbruch als sogenannter Aktivimpuls (active) in Bezug auf die Bus-Nominalgleichspannung definiert. Zum Zwecke der Energieminimierung beim Senden einer Nachricht folgt anschließend eine definierte Spannungsüberhöhung über die nominale Busspannung hinaus als sogenannter Ausgleichsimpuls (equalisation). Dies dient der Energierückführung auf die Busleitung nach jedem einzelnen Bit. Dieser Ausgleichsimpuls klingt als Exponentialfunktion ab, bis das nächste Bit eines Telegramms erscheint, d.h. maximal bis zum Ende der Periode eines Einzelbits.

Busknoten in ihrer Funktion als Sender generieren diese Signale entsprechend. Idealerweise sollte dieselbe Energiemenge, die ein Bitimpuls dem Bus entzieht, danach wieder eingespeist werden.

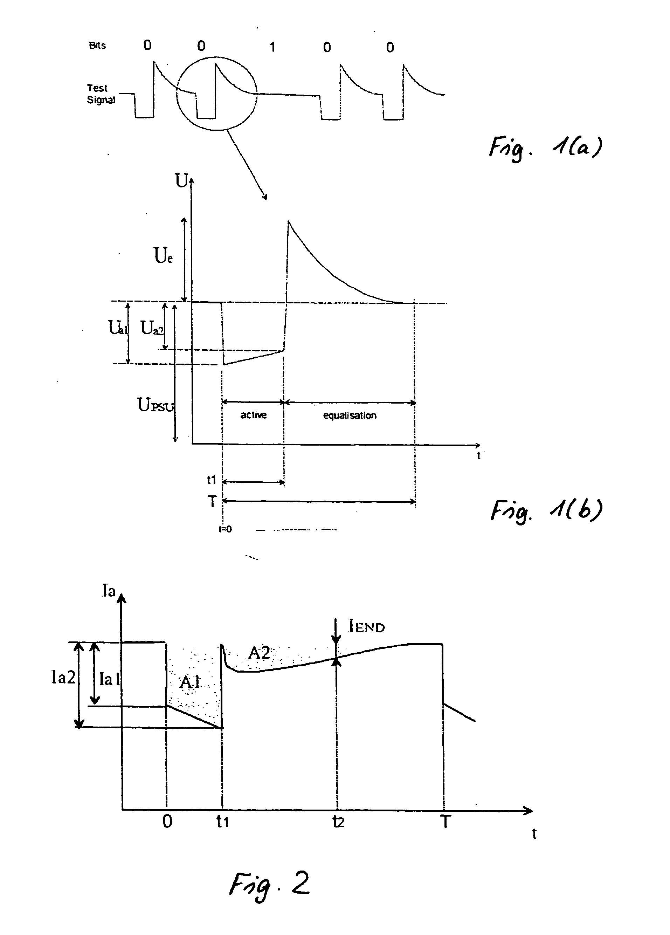

Figur 1 zeigt im Teilbild (a) eine Bitfolge aus einem beispielhaften Telegramm, wobei im Teilbild (b) ein einzelnes Bitsignal mit der Spannungsüberhöhung I,equalisation) nach einem Aktivimpuls (active) der Dauer t₁ dargestellt ist. In Figur 1 (b) ist U_{PSU} die nominale Busspannung, Ua₁ und Ua₂ sind für den Spannungseinbruch repräsentativ, wobei in der Praxis, anders als in Figur 1 (a) dargestellt, Ua₁ zumeist von Ua₂ abweicht. Ue stellt die Spannungsüberhöhung dar, die über die Zeitdauer T-t1 exponentiell abklingt. Dabei ist T die Bitperiode, innerhalb der der Ausgleichsimpuls abgeklungen sein muss, um für das nächste Bit definierte Spannungsbedingungen sicherzustellen.

Klassische Spannungsversorgungen ohne besondere Maßnahmen, wie beispielsweise Linearregler, würden je nach Strombelastung der angeschlossenen Schaltung die Spannungsüberhöhung beträchtlich dämpfen, oft bis zur Annullierung, so dass der gewünschte Energieausgleich nicht stattfinden kann.

Die EP 0 770 285 B1 offenbart eine Einrichtung zum Bereitstellen einer Versorgungsspannung in einem Busknoten eines Busnetzes, bei der der Widerstand einer Ankoppelschaltung zwischen Busleitungen und Spannungsversorgung hinreichend niedrig und für Aktivimpulse ausreichend groß ist, indem die höchste Regelfrequenz tiefer als die niedrigste Übertragungsfrequenz eingestellt wird. Nach verschiedenen Regelkriterien kann beispielsweise auf konstante Versorgungsspannung oder auf minimalen Stromverbrauch optimiert werden. Immer weist die bekannte Einrichtung eine Konstantstromquelle auf, die in Serie mit einer Kapazität geschaltet ist, über der die Versorgungsspannung abgegriffen wird, wobei die Serienschaltung direkt oder indirekt an einen Bus mit Busleitern, die auf unterschiedlichem Potential liegen, angeschlossen ist. Die Ankoppelschaltung ist mit bipolaren Transistoren ausgeführt, wobei in Betracht gezogen wird, diese durch Feldeffekttransistoren zu ersetzen.

Belastungsschwankungen können mit der Einrichtung gemäß EP 0 770 285 B1 allerdings nur ungenügend abgefangen werden.

Aus der WO 2007/003254 A1 ist eine Einrichtung zum Bereitstellen einer belastbaren Versorgungsspannung in einem Busknoten eines Busnetzes bekannt, mit einer Stromquelle, die in Serie mit einer Kapazität geschaltet ist, über der die Versorgungsspannung abgegriffen wird, wobei die Serienschaltung direkt oder indirekt an einen Bus mit Busleitern, die auf unter-schiedlichem Potential liegen, angeschlossen ist. Ein erstes Regelmoduls, dort als "charging circuit" bezeichnet, stabilisiert den Arbeitspunkt der Stromquelle unabhängig von Bussignalen auf den Busleitern und von Belastungen oder Belastungsänderungen der Versorgungsspannung. Ein zweites Regelmodul, dort als "power consumption reducing circuit" bezeichnet, passt den Arbeitspunkt der Stromquelle ansprechend auf ein Bussignal auf den Busleitern an.

Es ist daher die Aufgabe der Erfindung, eine Einrichtung zum Bereitstellen einer belastbaren Versorgungsspannung in einem Busknoten eines Busnetzes zur Verfigung zu stellen, die insbesondere bei Belastungsänderungen stabil gehalten werden kann.

Diese Aufgabe wird durch eine Einrichtung nach Anspruch 1 gelöst. Vorteilhafte Ausgestaltungen sind Gegenstand der rückbezogenen Ansprüche. Anspruch 6 gibt eine Verwendung für die Einrichtung gemäß Anspruch 1 an.

Erfindungsgemäß sind bei einer Einrichtung zum Bereitstellen einer belastbaren Versorgungsspannung in einem Busknoten eines Busnetzes, insbesondere in einem Busknoten eines EIB-Netzes, mit einer Stromquelle, die in Serie mit einer Kapazität geschaltet ist, über der die Versorgungsspannung abgegriffen wird, wobei die Serienschaltung direkt oder indirekt an einen Bus mit Busleitern, die auf unterschiedlichem Potential liegen, angeschlossen ist, ein erstes Regelmodul, das den Arbeitspunkt der Stromquelle unabhängig von Bussignalen auf den Busleitern und von Belastungen oder Belastungsänderung der Versorgungsspannung stabilisiert, und ein zweites Regelmodul, das den Arbeitspunkt der Stromquelle ansprechend auf ein Bussignal auf den Busleitern anpasst, vorgesehen.

Durch die Erfindung gelingt es, eine in Serie geschaltete Stromquelle nicht als Konstantstromquelle, sondern als linearen Spannungsregler zu betreiben und insbesondere mit Hilfe des zweiten Regelmoduls wie einen regelbaren Widerstand zu beschalten. {Tapko-Papier} Dieser nimmt genau zum Endzeitpunkt t₁ des Aktivimpulses bis maximal zum Endzeitpunkt T der Bitperiode, das heißt während des Ausgleichsimpulses, einen definiert höheren Widerstand an, so dass Ausgleichsimpulse nur wenig bedämpft werden. Mit anderen Worten wird nach jedem Aktivimpuls der dynamische Widerstand gegen den Bus verringert. Darüber hinaus sorgt das erste Regelmodul hauptsächlich dafür, dass auf Belastungen und insbesondere Belastungsänderungen der Versorgungsspannung adäquat reagiert werden kann.

Dabei ist als Stromquelle mindestens ein MOSFET vorgesehen. MOSFETs zeichnen sich dadurch aus, dass sie kostengünstig sind, allerdings weisen sie eine relativ breite Streuung der Abschnürspannung bzw. der gesamten Gate-Charakteristik von Exemplar zu Exemplar auf. Durch Bereitstellen des ersten Regelmoduls gelingt es, diese exemplarabhängige Streuung der Kenngrößen unschädlich zu machen.

Erfindungsgemäß weist das zweite Regelmodul ein nur für Spannung einer ersten Polarität durchlässiges erstes Ventil in Form eines Diode und ein nur für Spannung einer zweiten Polarität durchlässiges zweites Ventil in Form eines Transistors auf. Eines der Ventile reagiert beispielsweise bei der fallenden Flanke eines Aktivpulses, das andere bei der steigenden Flanke des Aktivpulses oder umgekehrt. Das entsprechende Ventil wird durch die jeweilige andere Flanke nicht beeinflusst Durch eine entsprechende Beschaltung der Ventile kann dann sichergestellt werden, dass die Stromquelle wie erforderlich zu einem höheren oder einem niedrigeren Widerstand hin gesteuert wird.

Durch die vorteilhafte Dimensionierung der Elemente des zweiten Regelmoduls kann das dynamische Verhalten so angepasst werden, dass der dynamische Stromverlauf erfüllt wird, den das Konnex Handbuch, Version 2.0, Volume 8, System Conformance Testing, Part 2: Medium Dependant Layers Tests, Chapter 2: TP1 Physical and Link Layer, Test 6.1, erfüllt. Figur 2 veranschaulicht dazu eine indirekte Messmethode mittels Verhältnis der Strom/Zeit-Flächenanteile von Aktivimpuls und Ausgleichsimpuls.

Weiter stabilisiert das erste Regelmodul eine Zwischenspannung, wobei der Arbeitspunkt der Stromquelle durch die Größe der Zwischenspannung festgelegt ist. Somit wird der Arbeitspunkt bzw. Serienwiderstand der Stromquelle, beispielsweise eines MOSFET oder mehrerer MOSFETs, eingeregelt. Vorteilhaft ist der mindestens eine MOSFET ein n-MOSFET vom Anreicherungstyp.

Diese Regelung erfolgt weiter bevorzugt durch eine Rückkopplung, so dass das erste Regelmodul die Zwischenspannung stabilisiert, indem die Zwischenspannung nur so lange erhöht oder erniedrigt wird, bis der Sollwert der Versorgungsspannung (U) erreicht ist. Da sichergestellt werden muss, dass das rückkoppelnde erste Regelmodul nicht auf Bussignale anspricht, ist vorzugsweise ein Filter vorgesehen, der dem ersten Regelmodul eine statische Funktion verleiht.

Die Zwischenspannung wird vorzugsweise über einem Kondensator erzeugt, der, mit einem Widerstand in üblicher Weise beschaltet, auch einen Filter gegen aktive Bussignale bildet.

Weiter vorteilhaft ist der Filter so dimensioniert, dass zugleich auch der geforderte Sanftanlauf beim Einschalten eines Bussystems, das aus mehreren miteinander kommunizierenden Busknoten besteht, gesichert ist. Um beispielsweise im Fall des EIB ein korrektes Arbeiten zu gewährleisten, darf die Höhe der Zwischenspannung nicht unter der als Minimum geltenden Busspannung, vermindert um einen Spannungseinbruch, der durch einen maximal möglichen Aktivimpuls des Nutzsignals zusätzlich generiert wird.

Als weiterer Vorteil erweist es sich, dass diese Zwischenspannung als weitere belastbare Spannungsquelle ausgelegt werden kann, direkt oder mittels Spannungswandlern für die Steuereinheit, z.B. einen Mikroprozessor, ebenso wie für die anzuschließende Applikationsschaltung. Eine Spannungsumwandlung kann dabei nach bekannten Maßnahmen erfolgen, insbesondere mittels eines Linearreglers nach unten, mittels eines Spannungsvervielfachers, so wie einem Verdoppler, nach oben, oder mittels eines Schaltnetzteiles nach oben oder unten.

Eine Einrichtung gemäß der vorliegenden Erfindung kann in einer anwendungsspezifischen integrierten Schaltung verwendet werden, die weiterhin mindestens einen Sender, einen Empfänger und ein Schaltnetzteil enthalten würde.

Im Folgenden soll die Erfindung anhand der beigefügten Zeichnungen in Einzelheiten beschrieben werden. Dabei zeigt:
- Figur 1: eine Bitfolge aus einem Beispieltelegramm im Teilbild (a) sowie eine Ausschnittsvergrößerung mit zugehöriger Spannung im Teilbild (b);
- Figur 2: eine Veranschaulichung einer indirekten Messmethode gemäß dem Konnex-Standard;
- Figur 3: ein stark schematisiertes Blockschaubild für eine Einrichtung zum Bereitstellen einer belastbaren Versorgungsspannung gemäß der vorliegenden Erfindung;.
- Figur 4: ein erstes Regelmodul gemäß der vorliegenden Erfindung;
- Figur 5: ein zweites Regelmodul gemäß der vorliegenden Erfindung; und
- Figur 6: ein Ausführungsbeispiel einer Einrichtung zum Bereitstellen einer belastbaren Versorgungsspannung in einem Busknoten eines Busnetzes gemäß der vorliegenden Erfindung.

In der nachfolgenden Beschreibung und in den Zeichnungen sind zahlreiche bestimmte Einzelheiten aufgeführt. Es wird jedoch verstanden, dass Ausführungsformen der vorliegenden Erfindung ohne diese bestimmten Einzelheiten in die Praxis umgesetzt werden können. In anderen Fällen sind gut bekannte Schaltungen, Strukturen und Techniken weggelassen, um das Verständnis der Erfindung nicht zu erschweren. Es wird verstanden, dass an den dargestellten Ausführungsformen zahlreiche Modifikationen und Abänderungen vorgenommen werden können, ohne dass man sich vom Umfang der Erfindung entfernt. Die dargestellten Ausführungsbeispiele sollen daher als beschreibend und nicht als beschränkend angesehen werden.

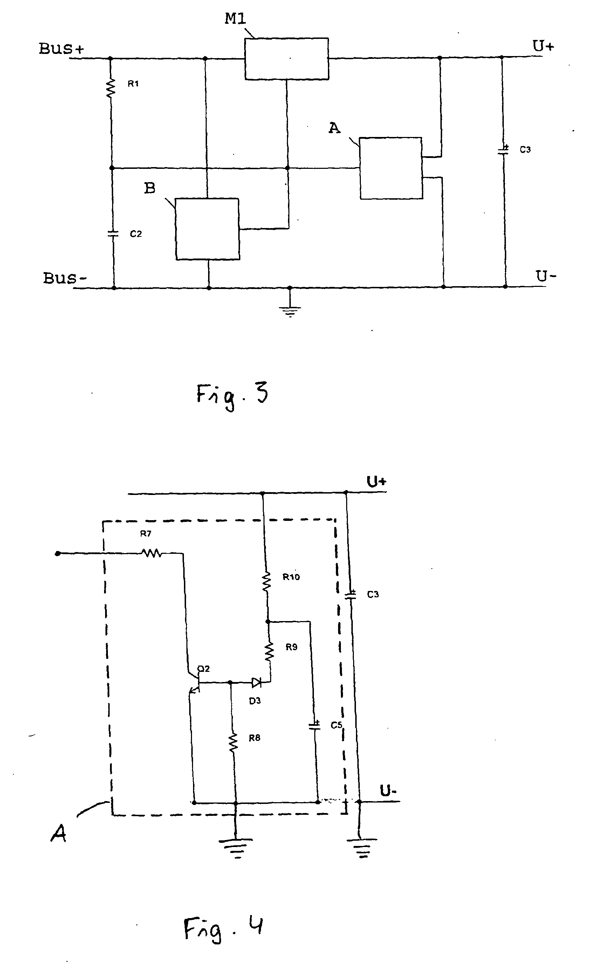

Figur 3 zeigt ein stark schematisiertes Blockschaubild für eine Einrichtung zum Bereitstellen einer belastbaren Versorgungsspannung gemäß der vorliegenden Erfindung. Bus+ und Bussind die Anschlüsse für die Busleitungen, U+ und U- Ausgänge, an denen die Versorgungsspannung U abgenommen wird. Dabei ist ein Kondensator C3 zwischen die Anschlüsse U+ und U- geschaltet, der als Energiespeicher und Spannungsglätter für die Versorgungsspannung U dient. Eine Stromquelle M1 ist in Serie zwischen den Anschluss Bus + und den Anschluss U+ gelegt und ist als regelbarer Widerstand beschaltet. Über einem Kondensator C2, der in Serie mit einem Widerstand R1 zwischen die Anschlüsse Bus+ und Bus- gelegt ist; wird eine Zwischenspannung abgegriffen, die zur Steuerung der Stromquelle M1 dient. Beim Einschalten der Busspannung an Bus+ und Bus- ist die Stromquelle M1 gesperrt. Der Kondensator C2 wird langsam geladen, als Folge wird die Stromquelle M1 mehr und mehr leitend. Damit wird auch die Größe der Spannung über dem Kondensator C2 erhöht. Ein erstes Regelmodul A dient dazu, den Arbeitspunkt der Stromquelle M1 zu stabilisieren. Erreicht die Spannung über dem Kondensator C3 nämlich einen durch das erste Regelmodul A vorgegebenen Grenzwert, fließt ein Strom von dem ersten Regelmodul A zu dem Kondensator C2, der eine weitere Aufladung des Kondensators C2 verhindert. Damit verbleibt die Stromquelle M1 auf dem nun eingeregelten Widerstandswert. Beim Absinken der Spannung über dem Kondensator C3 unter den definierten Grenzwert sperrt das erste Regelmodul A, und es erfolgt eine Ausregelung in umgekehrter Richtung. Um diesen statisch eingestellten Widerstand der Stromquelle M1 dynamisch zu beeinflussen, ist das zweite Regelmodul B vorgesehen. Das zweite Regelmodul B wirkt so, dass bei der fallenden Flanke eines an Bus+ und Bus- ankommenden Aktivimpulses der Widerstand der Stromquelle M1 unbeeinflusst bleibt, während bei der steigenden Flanke des Aktivimpulses der Widerstand der Stromquelle M1 kurzzeitig höher wird.

Figur 4 zeigt ein erstes Regelmodul gemäß der vorliegenden Erfindung in einem beispielhaften diskreten Aufbau. Eine Zenerdiode D3 ist so dimensioniert, dass ihre Zenerspannung aufgrund der Basis-Emitter-Spannung eines Transistors Q2, dessen Basis an der Anode der Zenerdiode D3 liegt, um etwa 0.7 V niedriger angesetzt ist, als die gewünschte Höhe der Ausgangsspannung U. Erreicht nun die Spannung, die über dem Kondensator C3 abgegriffen wird, die Höhe der Zenerspannung der Zenerdiode D3 plus etwa 0.7 V, öffnet die Diode D3. Der Transistor Q2 wird somit leitend, und über den Widerstand R7 fließt aus dem ersten Regelmodul A ein Strom, der das weitere Aufladen des Kondensator C2 (Figur 3) verhindert. Beim Absinken der Spannung über dem Kondensator C3 unter den oben genannten Wert sperrt der Transistor Q2, und es erfolgt eine Ausregelung in umgekehrter Richtung. Der Widerstand R10 und der Kondensator C5 bilden einen Filter im ersten Regelmodul A gegen aktive Bussignale. Die Versorgungsspannung U, die über dem Kondensator C3 abgegriffen wird, ist somit geregelt und unabhängig von den an den Eingängen Bus+ und Bus- ankommenden Aktivimpulsen sowie Lastsprüngen einer an U+ und U- angeschlossenen Schaltung.

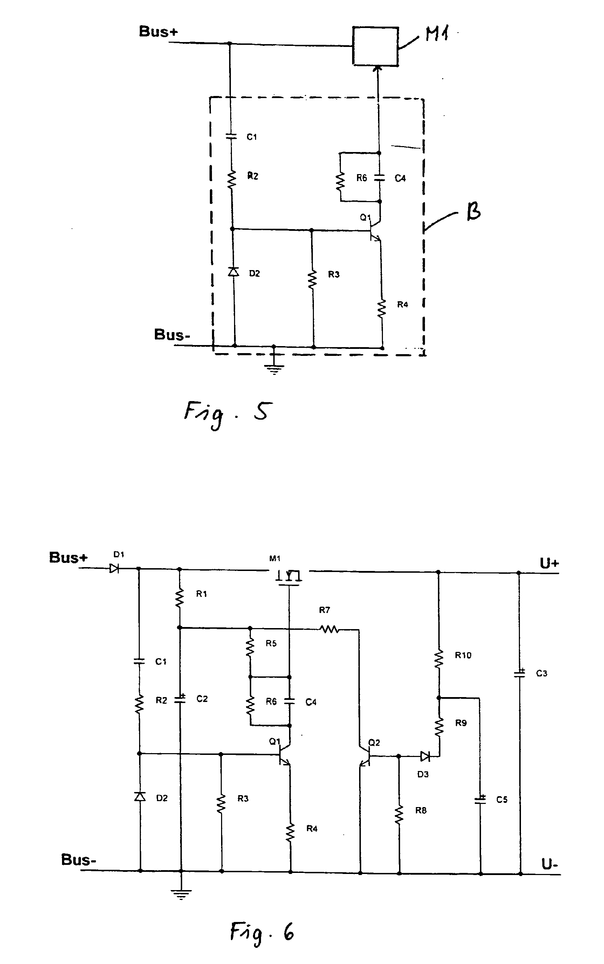

Figur 5 zeigt ein Beispiel eines diskreten Aufbaus für das zweite Regelmodul gemäß der vorliegenden Erfindung. Ein Kondensator C1 wirkt zusammen mit einem Widerstand R2 als Differenzierglied. Bei der fallenden Flanke eines an Bus+ und Bus- ankommenden Aktivimpulses erscheint an der Kathode der Diode D2 eine negative Spannungsspitze, und die Diode D2 wird für einen kurzen Moment leitend. Der Transistor Q1, dessen Basis an der Kathode der Diode D2 liegt, wird durch den negativen Impuls nicht beeinflusst, so dass auch der Arbeitspunkt der Stromquelle M1 keine Änderung erfährt. Bei der steigenden Flanke des Aktivimpulses hingegen wird der Transistor Q1 kurzzeitig leitend. Über den Kondensator C4, den Widerstand R6 und den Widerstand R4 wird die Spannung an der Stromquelle M1 so beeinflusst, dass der Widerstand der Stromquelle M1 kurzzeitig höher wird. Durch eine entsprechende Dimensionierung dieser Elemente des zweiten Regelmoduls B kann das dynamische Verhalten so angepasst werden, dass der dynamische Stromverlauf innerhalb einer Bitperiode die Testbedingungen gemäß Figur 2 erfüllt.

Figur 6 zeigt einen vollständigen diskreten Aufbau einer Einrichtung zum Bereitstellen einer belastbaren Versorgungsspannung in einem Busknoten eines Busnetzes gemäß der vorliegenden Erfindung, wobei ein erstes Regelmodul A gemäß Figur 4 und ein zweites Regelmodul B gemäß Figur 5 verwendet werden. In die Busleitung Bus+ ist eine Diode D1 als Verpolschutz geschaltet. In Serie mit dem Ausgang U+ ist als Stromquelle M1 ein als Source-Folger beschalteter MOSFET vom Anreicherungstyp geschaltet, der also selbstsperrend ist. Statt einem einzelnen MOSFET können auch zwei oder mehrere MOSFETs vorgesehen sein, wenn dies aus Kostengründen erforderlich erscheint. Das Gate des MOSFET M1 ist über einen Widerstand R5 an den Kondensator C2 angeschlossen. Je nach Höhe der Spannung am Kondensator C2 wird der MOSFET M1 mehr oder weniger aufgesteuert und kann damit die Höhe der Spannung am Kondensator C3 beeinflussen. Beim Einschalten der Busspannung an Bus+ und Bus- ist der MOSFET M1 zunächst gesperrt. Nun wird der Kondensator C2 über den Widerstand R1 relativ langsam geladen, so dass der MOSFET M1 mehr und mehr leitend wird und sich somit die Spannung über dem Kondensator C3 erhöht. Erreicht die Spannung über dem Kondensator C3 den durch das erste Regelmodul A vorgegebenen Grenzwert, fließt, wie oben im Zusammenhang mit der Figur 4 erläutert, über den Widerstand R7 ein Strom, der verhindert, dass der Kondensator C2 weiter aufgeladen wird. Der statische Widerstandswert des MOSFET M1 ist nun eingeregelt Durch eine entsprechende Dimensionierung des Widerstandes R1 und des Kondensators C2 wird zusätzlich auch der geforderte Sanftanlauf der Schaltung gesichert. Zusätzlich zu dem im ersten Regelmodul enthaltenden Filter ist mit dem Widerstand R1 und dem Kondensator C2 ein zweiter Filter gegen aktive Bussignale vorhanden, so dass die Spannung über dem Kondensator C3 unabhängig von den von den Eingängen Bus+ und Bus- ankommenden Aktivimpulsen sowie Lastsprüngen einer am Ausgang angeschlossenen Schaltung ist. Das zweite Regelmodul B sorgt, wie im Zusammenhang mit der Figur 5 beschrieben, für die dynamische Anpassung des Arbeitspunktes des MOSFET M1, da sein Steuerausgang an das Gate des MOSFET M1 gelegt ist.

Auf Basis der dargestellten Schaltung ist die Entwicklung einer anwendungsspezifischen integrierten Schaltung (ASIC *- Application Specific Integrated Circuit)* denkbar, die dann auch weitere Schaltungsteile, wie beispielsweise Sender, Empfänger, Schaltnetzteile und weiteres umfassen könnte.

## Patentansprüche

1. Einrichtung zum Bereitstellen einer belastbaren Versorgungsspannung in einem Busknoten eines Busnetzes, insbesondere in einem Busknoten eines EIB-Netzes, mit
- einer mindestens einen MOSFET umfassenden Stromquelle (M1), die in Serie mit einer Kapazität (C3) geschaltet ist, über der die Versorgungsspannung (U) abgegriffen wird, wobei die Serienschaltung (M1, C3) direkt oder indirekt an einen Bus mit Busleitern (Bus+, Bus-), die auf unterschiedlichem Potential liegen, angeschlossen ist;
- einem ersten Regelmodul (A), das den Arbeitspunkt der Stromquelle (M1) unabhängig von Bussignalen auf den Busleitern (Bus+, Bus-) und von Belastungen oder Belastungsänderungen der Versorgungsspannung (U) stabilisiert, wobei das erste Regelmodul (A) eine Zwischenspannung stabilisiert und der Arbeitspunkt der Stromquelle (M1) durch die Größe der Zwischenspannung festgelegt ist; und
- einem zweiten Regelmodul (B), das den Arbeitspunkt der Stromquelle (M1) abhängig von einem Bussignal auf den Busleitern (Bus+, Bus-) anpasst, wobei das zweite Regelmodul (B) ein nur für Spannung einer ersten Polarität des Bussignals durchlässiges erstes Ventil (D2) und ein nur für Spannung einer zweiten Polarität des Bussignals durchlässiges zweites Ventil (Q1) aufweist,
**dadurch gekennzeichnet, dass** das zweite Regelmodul (B) als erstes Ventil eine Diode (D2) und als zweites Ventil einen Transistor (Q1) umfasst, welcher mit seinem Kollektor an das Gate des MOSFET geschaltet ist, wobei die Kathode der Diode mit dem auf höherem Potential liegenden Busleiter (Bus+) und mit der Basis des Transistors (Q1) verbunden ist, so dass er nur bei einer steigenden Flanke eines Bussignals leitend ist und den Widerstand des MOSFET erhöht.

2. Einrichtung nach Anspruch 1, **dadurch gekennzeichnet, dass** das erste Regelmodul (A) die Zwischenspannung stabilisiert, indem die Zwischenspannung nur so lange erhöht oder erniedrigt wird, bis der Sollwert der Versorgungsspannung (U) erreicht ist.

3. Einrichtung nach Anspruch 1, **dadurch gekennzeichnet, dass** die Zwischenspannung über einem Kondensator (C2) erzeugt wird.

4. Einrichtung nach Anspruch 3, **dadurch gekennzeichnet, dass** durch geeignete Dimensionierung eines dem Kondensator (C2) vorgeschalteten Widerstandes (R1) ein Sanftanlauf beim Einschalten der Busspannung sichergestellt ist

5. Einrichtung nach einem der Ansprüche 1 bis 4, **dadurch gekennzeichnet, dass** der mindestens eine MOSFET ein n-MOSFET vom Anreichungstyp ist.

6. Verwendung einer Einrichtung zum Bereitstellen einer belastbaren Versorgungsspannung in einem Busknoten eines Busnetzes nach einem der Ansprüche 1 bis 5 in einer anwendungsspezifischen integrierten Schaltung (ASIC).

## Claims

1. A device for providing a loadable supply voltage in a bus node of a bus network, in particular in a bus node of an EIB network, comprising
- a current source (M1) including at least one MOSFET which is connected in series with a capacitor (C3) across which the supply voltage (U) is tapped, wherein the series circuit (M1, M3) is directly or indirectly connected to a bus having bus lines (Bus+, Bus-) at different potentials;
- a first control module (A) which stabilizes the operating point of the current source (M1) independently of bus signals on the bus lines (Bus+, Bus-) and loads or load changes of the supply voltage (U), the first control module (A) stabilizing an intermediate voltage and the operating point of the current source (M1) being determined by the magnitude of the intermediate voltage; and
- a second control module (B) which adjusts the operating point of the current source (M1) responsive to a bus signal on the bus lines (Bus+, Bus-), the second control module (B) comprising a first valve (D2) open only for a voltage of a first polarity of the bus signal and a second valve (Q1) open only for a voltage of a second polarity of the bus signal,
**characterized in that** the second control module (B) comprises a diode (D2) as the first valve and a transistor (Q1) as the second valve which is connected to the gate of the MOSFET via its collector, wherein the cathode of the diode is connected to the bus line (Bus+) at the higher potential and to the basis of the transistor, so that it is conductive only for a rising edge of the bus signal and rises the resistance of the MOSFET.

2. The device of claim 1, **characterized in that** the first control module (A) stabilizes the intermediate voltage by increasing or decreasing the intermediate voltage only until the set point of the supply voltage (U) is reached.

3. The device of claim 1, **characterized in that** the intermediate voltage is produced across a capacitor (C2).

4. The device of claim 3, **characterized in that** by suitably dimensioning a resistor (R1) which is connected upstream the capacitor (C2) a soft start when switching on the bus voltage is ensured.

5. The device of any of claims 1 to 4, **characterized in that** the at least one MOSFET is an enhancement mode n-MOSFET.

6. The use of a device for providing a loadable supply voltage in a bus node of a bus network according to any of claims 1 to 5 in an application specific integrated circuit.

## Revendications

1. Dispositif destiné à fournir une tension d'alimentation apte à supporter une charge dans un noeud de bus d'un réseau de bus, en particulier dans un noeud d'un réseau de bus EIB, comportant
- une source de courant (M1) qui comprend au moins un MOFSET et qui est montée en série avec une capacité (C3), par l'intermédiaire de laquelle est prélevée la tension d'alimentation (U), le montage en série (M1, C3) étant raccordé directement ou indirectement à un bus avec des lignes de bus (bus+, bus-) auxquelles est appliqué un potentiel différent ;
- un premier module de réglage (A), qui stabilise le point de fonctionnement dynamique de la source de courant (M1) indépendamment des signaux de bus sur les lignes de bus (bus+, bus-) et des sollicitations ou variations de sollicitations de la tension d'alimentation (U), le premier module de réglage (A) stabilisant une tension intermédiaire, et le point de fonctionnement dynamique de la source de courant (M1) étant défini par la valeur de la tension intermédiaire ; et
- un deuxième module de réglage (B), qui ajuste le point de fonctionnement dynamique de la source de courant (M1) en fonction d'un signal de bus sur les lignes de bus (bus+, bus-), le deuxième module de réglage (B) comportant une première valve (D2) laissant passer uniquement la tension d'une première polarité du signal de bus et une deuxième valve (Q1) laissant passer uniquement la tension d'une deuxième polarité du signal de bus,
**caractérisé en ce que** le deuxième module de réglage (B) comporte une diode (D2) pour former la première valve et un transistor (Q1) pour former la deuxième valve, lequel est raccordé avec son collecteur à la grille du MOSFET, la cathode de la diode étant reliée à la ligne de bus (bus+), à laquelle est appliqué le potentiel le plus élevé, et à la base du transistor (Q1), de telle sorte qu'il est conducteur uniquement sur un flanc ascendant du signal de bus et augmente la résistance du MOSFET.

2. Dispositif selon la revendication 1, **caractérisé en ce que** le premier module de réglage (A) stabilise la tension intermédiaire du fait que la tension intermédiaire est augmentée ou diminuée seulement jusqu'à ce que la valeur de consigne de la tension d'alimentation (U) soit atteinte.

3. Dispositif selon la revendication 1, **caractérisé en ce que** la tension intermédiaire est générée par l'intermédiaire d'un condensateur (C2).

4. Dispositif selon la revendication 3, **caractérisé en ce qu'**un dimensionnement approprié d'une résistance (R1), montée en amont du condensateur (C2), permet de garantir un démarrage en douceur lors de la mise en circuit de la tension du bus.

5. Dispositif selon l'une quelconque des revendications 1 à 4, **caractérisé en ce que** ledit au moins un MOSFET est un MOSFET de type N, du type à enrichissement.

6. Utilisation d'un dispositif destiné à fournir une tension d'alimentation apte à supporter une charge dans un noeud de bus d'un réseau de bus selon l'une quelconque des revendications 1 à 5 dans un circuit intégré propre à une application (ASIC).
